# EUROPEAN PATENT APPLICATION

(11) **EP 0 904 744 A2**
(43) Date of publication of application: **31.03.1999**
(21) Application number: 98610038.6
(22) Date of filing: 18.09.1998
(51) Int. Cl.: A61C 15/04

(54) **Holder for dental floss**

(30) Priority: 29.09.1997 DK 111397
(71) Applicant: Poser, John, 7100 Vejle (DK); Olesen, Ehlert, 7100 Vejle (DK)
(72) Inventor: Poser, John, 7100 Vejle (DK); Olesen, Ehlert, 7100 Vejle (DK)

(57) **Abstract**

The invention concerns a holder for dental floss and a mean and a way to tighten dental floss on a holder for dental floss.The holder is remarkable by being made with a first fork and a second fork for stretching dental floss between, and that the dental floss in the first fork stretches in a level (P1) and in the second fork stretches in a second level (P2). Thereby it is much easier with help of the dental floss in the first fork to clean between molars and with help of the dental floss in the second fork to clean between front teeth. The mean and the way to tighten the dental floss makes it possible to tighten the dental floss in the first fork and in the second fork at the same time. And keep the tightning.

## Description

The present invention is a holder for dental floss to remove impurities and bits of food between the teeth. The holder includes a handle a first fork and a second fork. Which first fork and second fork stretches out , related to the handle and which forks in the ends are made with means to take up the dental floss. The dental floss is specified to stretch between the fork ends and the first fork is specified for use between the molars and the second for use between the front teeth.

JP 8289898-A describs such a holder for dental floss. This known holder includes a handle and a first fork, which is produced in one end of the handle and a second fork, which is produced in the other end of the handle.The first and the second is in one and same level. A flexible link is produced in the handle near the second fork to allow a light bending of the second fork, related to the handle. The distance between the first fork and the forks ends is larger than the distance between the fork ends and the second fork. The first fork is for cleaning between the front teeth and the second for cleaning between molars.

However this holder prossesses several disadvantages. 1. It is very difficult to clean between molar even the handle is provide with a flexible link it is very difficult to control the handle, when the dental floss is in between the farest molars. 2. It is necessary to use each end of the holder, depending on whether it is between the front teeth or the molars cleaning is necessary. That means that the fork, which is not in use will be in the palm, that is very unhygienic, both for the palm and later use of the fork in the mouth. 3. It is not possible to change the dental floss if it breaks.

DE 296 21 823 U1 describes a device for tightning of dental floss in a holder for dental floss. The tightning is done with help of a screw which is provide with a slit and which is meant to be rotated in a seat, after leading the dental floss around the part of the srew that is outside the seat. Two ends of dental floss which stretches from one forkend is meant to be wind around the screw so that when the screw rotates the dental floss tightnes. The screw and the seat is provide with a hexagon so that the screw can be helt in the seat in given positons after rotating the screw.

The device, which is shown for this holder prossesses several disadvantages. 1. A lot of dental floss is waisted because it is both of the free ends of dental floss it needs to be winded around the screw to tighten the dental floss between fork ends. 2. The possibility that the hexagon is worn out after short-lived use is large. Then it is not longer possible to fasten the screw in the seat and with that not a possibility to keep the tightness of the dental floss. 3. It is difficult to tighten the floss because of large friction between floss and forkends.

The purpose of the present invention is to provide a holder for dental floss which not prossesses the disadvantages above. And that way can be used for both space between front teeth and molars in an easy and hygienic way and also that it is easy to tighten and maintain the tightning.

This purose achieves with a holder for dental floss, which is uniq, because when the dental floss is placed between the forkends and the first fork is in a first level. And when in use on the whole parallel with the space between the teeth. And second level is non-parallel with the first level.

A performance of the holder is uniq, because when the dental floss is placed between the forkends of the first fork it lies on the whole at a right angel for along axis for the handle. By providing a holder with forkends placed related to the handle that the dental floss in the first fork stretches along a first line and the dental floss in the second line stretches along a second line which is non-parallel with the first line, the possibility for cleaning between front teeth and molars optimizes,consideration for handposition around the handle and the holders extent in mouth depending on whether it is between front teeth or molars cleaning is done.

A prefered performance for the holder is uniq because the holder includes a first forkend a second forkend and a third forkend and because the second forkend is forkend for both the first forkend and the second forkend and the first forkend is provide with means to fasten a first end of dental floss and the second forkend is provide with means to take up the dental floss and the third forkend is provide with means to keep and straighten the dental floss.

With these characteristic provides a holder for dental floss, which contains several important advantages. 1. You can use the same piece of dental floss for both the first and the second fork, because the second forkend makes a bridge between the first fork and the second fork. 2. It is possible to mount a piece of dental floss which is taken from a roll of dental floss and replace it if the dental floss during use breaks.

A way to tightning the dental floss is uniq because the means on the third forkend for tightning the dental floss contains in proportion to the handle a separat screw with a hole which runs right through the screw and in proportion to the handle an integrated seat for taken up the screw and that the screw is made with a hole which runs in one level across along axis, that the screw is made with a reces which runs along an outer circumference of the screw in the same level as the hole, and that the seat is provided with a slit which runs in one level across along axis for the seat and in a right angel on the level for the hole in the screw.

With these characteristic it will be possible to tighten the dental floss individual and tighten the dental floss for both the first fork and the second fork just by tightning one of the free ends of the dental floss. The tightning happens while the dental floss is saftely kept in the screw and the screw is saftely kept in the seat. Thereby there is no risk for the dental floss to loosen, either during or after tightning.

The holder is mainly produced of plast which is approved for use in the mouth. E.g. the same type of plast toothbrushes are made off. The holder also has a grip that mainly has a size that is corresponding to the size of a toothbrush.

The invention will hereby be descreibed with more details reffering to the enclosed drawing, where
- Fig.1: Is a design depiction a procedure for a holder regarding the invention, and
- Fig.2: Is a cut through a procedure for a screw for tightning the holder regarding the Invention.

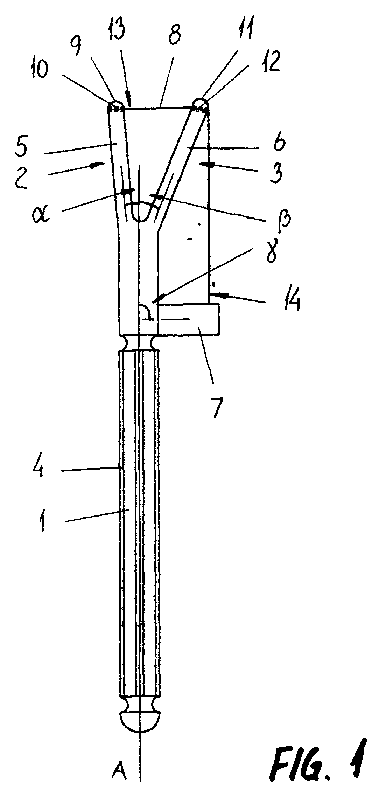

Fig.1 is a design depiction a procedure for a holder regarding the invention. The holder is made with a grip 1 and a first fork 2 and a second fork 3, which stretches out from the holder 1. The holder is in the shown procedure made with milling 4. That the grip in the hand is firm and not slippery. The first fork 2 and the second fork 3 includes a first forkend 5 a second forkend 6 and a third forkend 7. The second forkend 6 is forkend for both the first fork 2 and the second fork 3. A dental floss stretches from the first forkend 5 and around the second forkend 6 and to the the third forkend 7.

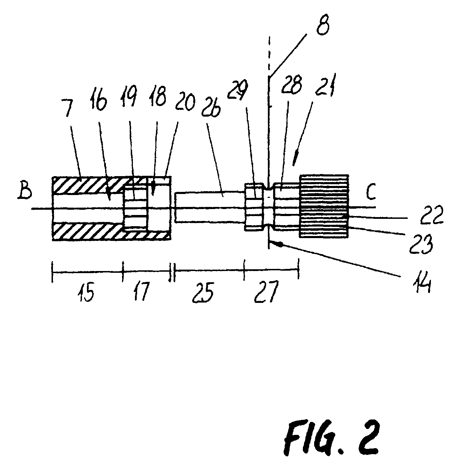

The first forkend is in the outer end made with a hole 9 (shown with a dotted line) which stretches across the forkend 5 in the level of the paper. The second forkend 6 is also in the outer end 11 made with a hole 12 (shown with a dotted line), which also stretches across the forkend in the level of the paper. The third forkend 7 is made with a device (see fig. 2) for tightning the dental floss.

The first forkend 5 stretches out from the grip 1 in an angelα on app. -5° in proportion to along axis A for the grip 1,, The second forkend 6 stretches out from the grip 1 in an angelβ on app. 25°in proportion to the along axis A for the grip 1 and the third forkend 7 stretches out from the grip in an angelγ on app. 90° in proportion to the along axis A for the grip 1. The angelα is negativ, that a tightning of the dental floss dont causes that the first forkend 5 will be led past the along axis a for the grip 1, and that the the first fork 2 obtains a certain spain between the first forkend 5 and the second forkend 6. Other angels can be used in stead of α, β and γ.

The holes 10,12 in the outer ends 9.11 of the first forkend 5 and the second forkend 6 is made for mounting and keeping the dental floss 8. In the shown procedure for the holder, the first forkend 5 and the second forkend 6 in the outer ends 9,11 is made with holes 10,12. The first forkend 5 and the second forkend 6 can alternativly in the outer ends be with slits, which the dental floss 8 can be led down in by mounting.

The dental floss will be mounted by making one or several knots ( not shown ) in the first end 13 of the dental floss 8. Another end 14 of the dental floss 8 will be led through the hole 10 in the outer end 9 of the first forkend 5, further through the hole 12 in the outer end 11 of the second forkend 6, further to the third forkend 7 and tighten with help of the device ( see fig. 2 ) in the third forkend 7.

The dental floss 8 in the first fork 2 between the first forkend 5 and the second forkend 6 is meant to clean between molars. In use the dental floss 8 in the first fork 2 will stretches in a level P1 corresponding to a level inbetween the molars and the holder is meant to be led forward and back related to the along axis A for the grip 1 as shown with the arrow Q1.

The dentalfloss 8 in the second fork 3 between the second forkend 6 ond the third forkend 7 is meant for cleaning between front teeth. In use the dental floss 8 in the first fork 3 will stretces in a level P2 corresponding to a level in the space between the front teeth, and the holder is meant to be led forward and back parellel to the along axis for the grip 1 as shown with the arrow Q2. The level P2 is non parellel with the level P1.

Fig.2 shows a cut through the third forkend 7 and the tightning device, which the third forkend 7 is made with. The third forkend includes a first part 15,which is made with a conic hole 16 with a circular cross section, and the second part 17which is made with a cylindrical hole 18, where a part of the cylindrical hole has a multi cornered cross section 19. The second part 17 is also made with a slit 20, which stretches across of the forkend 7 in the level of the paper. The conical hole 16 in the first part 15 of the forkend 7 and the cylindrical hole 18 in the second part 17 of the forkend 7 stretches concentric around one and the same along axis B.

The tightning device includes a screw 21, which is made with a fingergrip 22. The fingergrip is made with a chequering 23, that a rotation of the screw 21 can be done with a sufficient grip around the screw 21. The screw 21 includes a first part 25, which is made with a conocal tap 26 with circular cross section and a second part 27, which is made with a cylindrical tap 28, where a part of the cylindrical tap 28 has a multi cornered cross section 29. The second part 27 of the screw 21 is also made with a hole 30, which stretches across of the screw 21 in the level of the paper, and a reces 31, which runs along the second part 27 of the screw 21. The conic tap 26 in the first part 25 of the screw 21 and the cylindrical tap 28 in the second part 27 of the screw 21 stretches concentrical around one and the same along axis C, which in the shown depiction is identical with the along axis B for the third forkend 7.

Tightning the dental floss by means of the tightningdevice are done following: After tieing one or several knots on the first end 13 (see fig.1) on the dental floss 8, and after the second end 14 of the dental floss 8 is led through the hole 10 in the first forkend 5 and through the hole 12 in the second forkend 6, the second end 14 of the dental floss 8 will be led through the hole 30 in the screw 21.

The conic tap 26 on the screw 21 will afterwards partly be led in the conic hole 16 in the third forkend along the along axis B. The screw 21 will be led into the forkend 7 until the multi cornered tap 29 in the screw 21, in the shown figure is direct to the right of the multi cornered hole 19 in the forkend 7.The screw 21 will afterwards be rotated around the along axis C with the conic tap 26 as seattap and the conical hole 16 as seathole. The tap 26 is however not completely plant with the hole 16 as long as the multi cornered tap 29 on the screw 21is not in mesh with the multi cornered hole 19 in the forkend 7.

When the screw 21 is rotated, the dental floss is tightned by winding it around the reces 31 in the second part 27 of the screw 21. When the dental floss 8 is tighten so much as you wish, afterwards the conic tap 26 on the screw 21 will be led further into the conic hole 16 in the forkend 7, so that the multi cornered tap 29 on the screw 21 meshes with the multi cornered hole 19 in the forkend 7. The screw is hereby provented from rotating around the along axis C and the tightning of the dental floss 8 will be kept. When the conic tap 26 on the screw 21 is led further into the conic hole 16 of the forkend 7, the conic tap 26 will be in completely mesh with the conic hole 16, and the dental floss 8 will stretches from the screw 21 through the slit 20 against the second forkend 6 (see fig. 1).

The multi cornered hole in the forkend and the multi cornered tap on the screw is mainly 10-edged to make possibility of a high grade of adjustment and hold after tightning the dental floss. The holder according the invention is mainly produced of plast, but other materials as aluminium and stainles steel, perhaps combinated with plast can be used.

The invention is above descreibed referring to a specific design for a holder according the invention. Other designs can also be done, and be able to keep a dental floss in the same levels as the shown design, and be able to tighten the dental floss with the same or other means tha in the shown design.

## Claims

1. A holder for dental floss 8 to remove impurities and bits of food between the teeth, which holder includes a grip ( 1) and a first fork (2) and a second fork (3), which first fork (2) and the second fork (3) stretches from the grip (1) and out related to the grip (1), and which forks (2,3) in the forkends (5,6,7) are made with means to take up the dental floss (8), which dental floss (8) is meant to stretches between the forkends (5,6,7), and where the first fork (2) is meant to be used with dental floss (8) between molars, and the second fork (3) is meant to be used with dental floss (8) between front teeth. **Characterized** by , that the dental floss (8), when it is placed between the forkends (5,6) of the first fork (2) is in a first level (P1), Which in use on the whole is parallel with the space between molars, and that the dental floss (8), when it is placed between the forkends (6,7) of the second fork (3) is in a second level (P2) which in use in the whole is parallel with the space between the front teeth, and which in the second level (P2) is non-parallel with the first level (P1).

2. Holder according claim 1, **characterized** by, that the dental floss (8), when it is placed between the forkends (5,6) of the first fork (2). Is along a line which stretches on the whole at right angels with a along axis (A) for the grip (1) and that the dental floss (8), when it is placed between the forkends (6,7) of the second fork (3), is along a line which stretches on the whole parallel with the along axis (A) for the grip (1).

3. Holder according claim 1, **characterized** by, that the holder includes a first forkend (5) and a second forkend (6) and a third forkend (7) and that the second forkend (6) is forkend for both the first fork (2) and the second fork (3).

4. Holder according claim 3, **characterized** by, that the first forkend (5) is made with means (10) to keep a first end (13) of the dental floss (8) and the second forkend (6) is made with means (12) to take up the dental floss (8) and that the third forkend (7) is made with means (15-31) to keep and tighten the dental floss (8).

5. Holder according claim 4, **characterized** by, that the means for the first forkend (5)is a hole (10), which runs across the first forkend (5), that the means for the second forkend (6) is a hole (6), which runs across the second forkend (6) and that the means for the third forkend (7) includes, related to the grip (1), a separat screw (21) with a hole (30) which runs across through the screw (21), and in an, related to the grip (1), integreted seat (16,18) for taking up a tap (26,28) on the screw (21).

6. Mean for tightning of dental floss on a holder for dental floss, **characterized** by, along along axis (C) for a screw (21) has the srew (21) a first part (25) with a tap (26), which is conic and has a circular cross section, and a second part (27) which has a tap (28) which is cylindric and has a multi cornered cross section along along axis (B) for a forkend (7) has the forkend (7) a first part (15) with a hole (16) which is conic and has a circular cross section and a second part (17) with a hole (18) which is cylindrical and has a multi cornered cross section, and that the first part (15,25) of the forkend (7) and the screw (21) respectively the second part (17,27) of the forkend (7) and the screw (21) is meant to work together.

7. Mean according claim 6, **characterized** by, that the screw (21) is made with a hole (30) which stretches across along axis ( C ) for the screw (21) that the screw (21) is made with a reces (31), which stretches along an outer circumference of the screw (21), and that the forkend (7) is made with a slit (20) which stretches across along axis (B) for the forkend (7) and parallel with the hole (30) in the screw (21).

8. Way of tightning a dental floss with help of mean according claim 7, **characterized** by, that another end of the dental floss leads through the hole in the screw, that the screw leads parallel with along axis for the forkend into the forkend, that the dental floss stretches through the slit in the forkend, that the screw rotates around the along axis for the screw and that the dental floss winds around the screw, that the dental floss is led down in the reces.

9. Holder according any of the claims 1-5, **characterized** by, that the first forkend (5) stretches out from the grip (1) in an angel (α) between -45° and 0° related to the along axis (A) for the grip (1), that the second forkend (6) stretches out from the grip (1) in an angel (β) between 0° and 45° related to the along axis (A) for the grip (1) and that the third forkend (7) stretches out from the grip (1) in an angel (γ) between 45°-135° related to the along axis (A) for the grip (1).

10. Holder according claim 9, **characterized** by, that the first forkend (5) stretches out from the grip in an angelα between -15° and 0° related to the along axis for the grip, that the second forkend (6) stretches out from the grip in an angelβ between 0° and 30° related to the along axis from the grip in an angelγ on the whole 90° related to the along axis for the grip.
